# EUROPEAN PATENT SPECIFICATION

(11) **EP 4 336 229 B1**
(45) Date of publication and mention of the grant of the patent: **18.03.2026**
(21) Application number: 23170191.3
(22) Date of filing: 26.04.2023
(51) Int. Cl.: G02B 5/18, B32B 7/12

(54) **METHOD FOR MANUFACTURING OPTICAL ELEMENT**
VERFAHREN ZUR HERSTELLUNG EINES OPTISCHEN ELEMENTS
PROCÉDÉ DE FABRICATION D'ÉLÉMENT OPTIQUE

(30) Priority: 03.08.2022 US 202217817346; 31.08.2022 US 202263374003 P; 21.11.2022 US 202218057233
(43) Date of publication of application: 13.03.2024
(73) Proprietor: HIMAX TECHNOLOGIES LIMITED, Tainan City 74148 (TW)
(72) Inventor: KUO, Han Yi, 74148 TAINAN CITY (TW); HSU, Shu-Hao, 74148 TAINAN CITY (TW); LU, Yin Tung, 74148 TAINAN CITY (TW)
(74) Representative: Cabinet Beaumont

(56) References cited:
- EP-B1- 0 297 437
- KR-B1- 101 251 344
- US-A1- 2009 176 060
- US-A1- 2017 365 818
- US-A1- 2019 346 108
- US-A1- 2021 157 041

## Description

### BACKGROUND

### Field of Invention

The present invention relates to an optical technique. More particularly, the present invention relates to an optical element and a method for manufacturing the optical element.

### Description of Related Art

In the optical field, the using of optical elements with high diffraction angles enables optical devices to have better optical performance. In a convention method for manufacturing an optical element, a glue layer is firstly formed on a light penetrating substrate, and diffracting optical structures are directly imprinted in the glue layer. Thus, the refraction and the diffraction are limited by a refractive index of the glue layer.

Document US 2017/0365818 discloses structured lamination transfer films and methods.

Document US 2009/0176060 discloses process for producing 3-dimensional mold, process for producing microfabrication product, process for producing micropattern molding, 3-dimensional mold, microfabrication product, micropattern molding and optical device.

Document US 2019/0346108 discloses diffractive optical element and light irradiation apparatus.

Document US 2021/0157041 discloses a method of manufacturing a diffractive grating.

Document KR 101251344 discloses a 3-dimensional electrode using polyurethane acrylate pillar and a method of manufacturing for the same.

Document EP 0 297 437 discloses flexible replica grating and optical multiplexer/demultiplexer using it.

### SUMMARY

Therefore, one objective of the present invention is to provide an optical element and a method for manufacturing the optical element, in which various diffracting optical structures are formed on an optical layer, which is made from a high refractive index material, such that the optical element with a higher diffraction angle is obtained.

The invention is set out in the appended set of claims.

### BRIEF DESCRIPTION OF THE DRAWINGS

Aspects of the present invention are best understood from the following detailed description in conjunction with the accompanying figures. It is noted that in accordance with the standard practice in the industry, various features are not drawn to scale. In fact, dimensions of the various features can be arbitrarily increased or reduced for clarity of discussion.
FIG. 1 through FIG. 9, FIG. 10A, FIG. 11, FIG. 12A, FIG. 13, FIG. 14, FIG. 15A, and FIG. 16 are schematic diagrams of intermediate stages in a method for manufacturing of an optical element in accordance with one embodiment of the present invention.
FIG. 10B is a schematic diagram showing forming an adhesive layer on an optical layer in accordance with another embodiment of the present invention.
FIG. 12B is a schematic diagram showing performing a laser ablation step on a bonding layer in accordance with another embodiment of the present invention.
FIG. 12C is a schematic diagram showing performing an etching step on a carrier in accordance with still another embodiment of the present invention.
FIG. 15B is a schematic diagram showing performing an etching step on a bonding layer and a mold layer in accordance with another embodiment of the present disclosure.
FIG. 15C is a schematic diagram showing performing a chemical soaking step on a bonding layer and a mold layer in accordance with still another embodiment of the present disclosure.
FIG. 17 through FIG. 24, FIG. 25A, FIG. 26, FIG. 27A, and FIG. 28A are schematic diagrams of intermediate stages in a method for manufacturing of an optical element in accordance with one embodiment of the present disclosure.
FIG. 25B is a schematic diagram showing forming an adhesive layer on an optical layer in accordance with another embodiment of the present disclosure.
FIG. 27B is a schematic diagram showing performing an etching step on a carrier in accordance with another embodiment of the present disclosure.
FIG. 28B is a schematic diagram showing performing a chemical soaking step on a bonding layer and a mold layer in accordance with another embodiment of the present disclosure.

### DETAILED DESCRIPTION

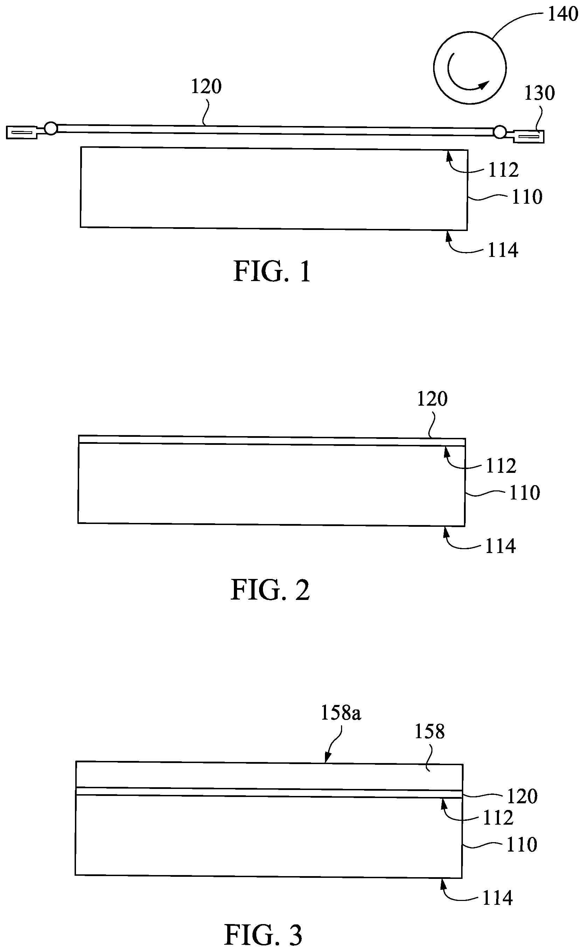

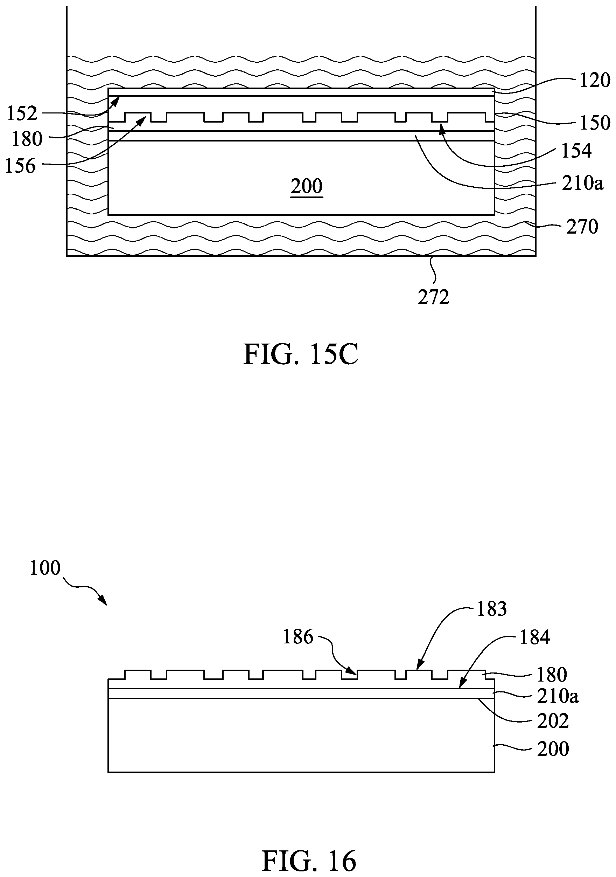

Referring to FIG. 1 through FIG. 9, FIG. 10A, FIG. 11, FIG. 12A, FIG. 13, FIG. 14, FIG. 15A, and FIG. 16, which are schematic diagrams of intermediate stages in a method for manufacturing of an optical element in accordance with one embodiment of the present invention. In the manufacturing of an optical element 100 shown in FIG. 16, a carrier 110 is firstly provided, as shown in FIG. 1. The carrier 110 may be a flat plate. For example, the carrier 110 has two opposite surfaces 112 and 114, in which at least the surface 112 is a flat surface. The carrier 110 may be a glass flat plate. For example, a thickness of the carrier 110 may be 300 µm.

Next, a bonding layer 120 is adhered to the surface 112 of the carrier 110, as shown in FIG. 2. The surface 112 of the carrier 110 is a flat surface, such that the bonding layer 120 can be smoothly adhered to the surface 112. Referring to FIG. 1 again, in some examples, the bonding layer 120 is held by a clamping apparatus 130. Then, the bonding layer 120 may be pressed onto the surface 112 of the carrier 110 by using, for example, a roller 140. The bonding layer 120 may be an adhesive tape.

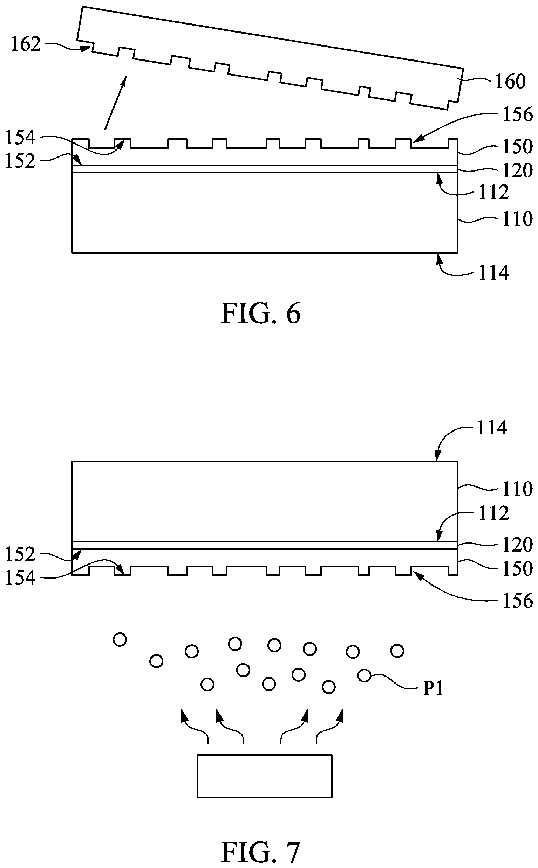

After the bonding layer 120 is adhered to the carrier 110, a mold layer 150 shown in FIG. 6 is formed on the bonding layer 120. The mold layer 150 has a first surface 152 and a second surface 154, in which the first surface 152 and the second surface 154 are opposite to each other. The first surface 152 is adjacent to the bonding layer 120. For example, the first surface 152 may directly contact with the bonding layer 120. The second surface 154 is set with microstructures 156.

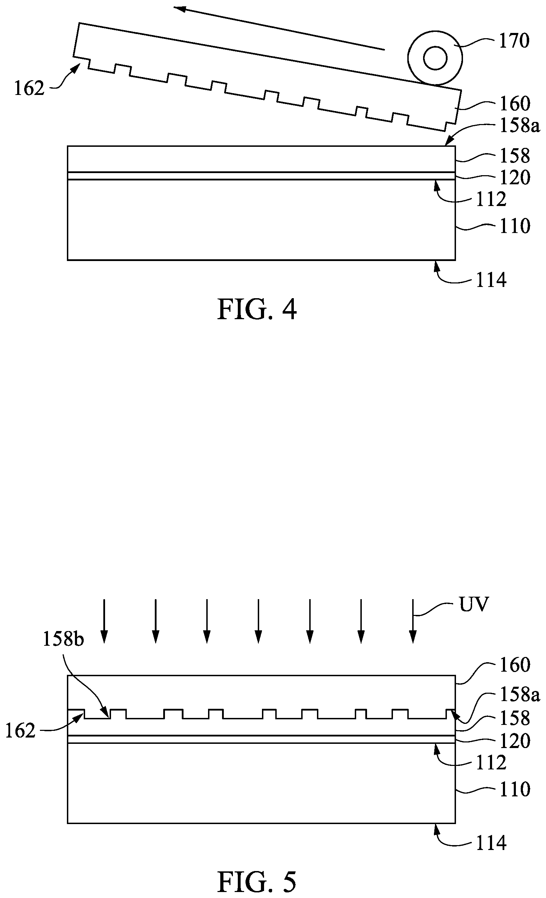

In some examples, in the formation of the mold layer 150, a glue layer 158 is coated on the bonding layer 120, as shown in FIG. 3. For example, the glue layer 158 may be formed on the bonding layer 120 by using a spin coating method. Then, the microstructures 156 are formed on a surface 158a of the glue layer 158, such that the mold layer 150 with the microstructures 156 is formed. That is the mold layer 150 is composed of the glue layer 158. In some examples, in the forming of the microstructures 156, an imprinting step is performed on the surface 158a of the glue layer 158 by using an imprinting mold 160. The imprinting mold 160 includes a pattern structure 162. In the imprinting step, as shown in FIG. 4 and FIG. 5, the imprinting mold 160 is pressed on the surface 158a of the glue layer 158 while the glue layer 158 has not been hardened, such that a portion of the glue layer 158 is embedded in the pattern structure 162. The imprinting step may be performed by using a roller 170 to press the imprinting mold 160 onto the surface 158a of the glue layer 158.

In some examples, as shown in FIG. 5, when the imprinting mold 160 is pressed on the surface 158a of the glue layer 158, the glue layer 158 is cured to maintain a shape of the surface 158a of the glue layer 158. Thus, after curing, a pattern structure 158b, which is opposite to the pattern structure 162 of the imprinting mold 160, is formed on the surface 158a of the glue layer 158. In some exemplary examples, the glue layer 158 is cured by using an ultraviolet light UV to perform an ultraviolet light exposure treatment on the glue layer 158. In the example that the glue layer 158 is cured by using the ultraviolet light UV, the imprinting mold 160 is transparent to the ultraviolet light UV. Alternatively, the glue layer 158 is cured by using an ultraviolet light UV to perform with a thermal curing treatment on the glue layer 158. The glue layer 158 may be cured by performing a thermal curing treatment on the glue layer 158. A material of the imprinting mold 160 may be, for example, resin polymer, metal, or oxide, but the material of the imprinting mold 160 is not limited thereto. Then, as shown in FIG. 6, the imprinting mold 160 is removed to complete the formation the microstructures 156 of the mold layer 150.

After the mold layer 150 is formed, an anti-sticking treatment is performed on the second surface 154 of the mold layer 150. In some examples, as shown in FIG. 7, in the anti-sticking treatment, the stacked structure including the carrier 110, the bonding layer 120, and the mold layer 150 is flipped, and an anti-sticking material P1 is deposited on the second surface 154 of the mold layer 150 by using, for example, an evaporation method. In another example, in the anti-sticking treatment, a surface modification treatment is performed on the second surface 154 of the mold layer 150 to make the second surface 154 have an anti-sticking property. The surface modification treatment may be performed by using plasma.

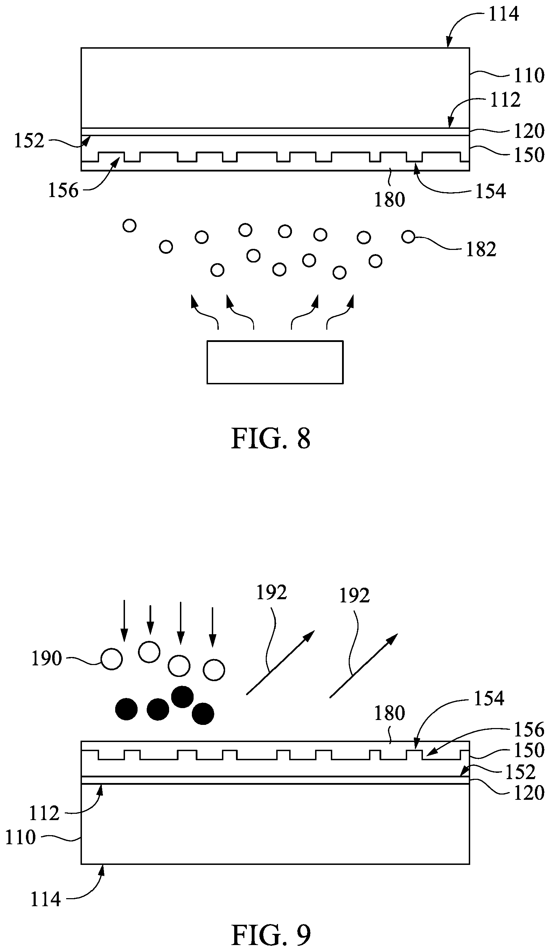

After performing the anti-sticking treatment, the optical layer 180 is formed on the second surface 154 of the mold layer 150 by using, for example, an atomic layer deposition method, an etching method, a sputtering method, an evaporation method, an imprinting method, or a spin coating method. The optical layer 180 covers the microstructures 156 of the mold layer 150 and fills the microstructures 156, such that a surface structure, which is opposite to a topographical structure of the second surface 154 of the mold layer 150, is formed on the optical layer 180. In some exemplary examples, as shown in FIG. 8, an optical material 182 is deposited on the second surface 154 of the mold layer 150 to form the optical layer 180 on the second surface 154. The optical layer 180 is formed from a high refractive index material. For example, a refractive index of the optical layer 180 may be ranging from 1 to 4.

In some examples, after the optical layer 180 is formed, the stacked structure including the carrier 110, the bonding layer 120, the mold layer 150, and the optical layer 180 is flipped. Then, as shown in FIG. 9, a plasma cleaning step may be optionally performed on the optical layer 180 to use a plasma 190 to clean the optical layer 180. For example, the plasma 190 may be an oxygen plasma. During the plasma cleaning step, products 192 are pumped out. The products 192 may be H₂O and/or CO₂.

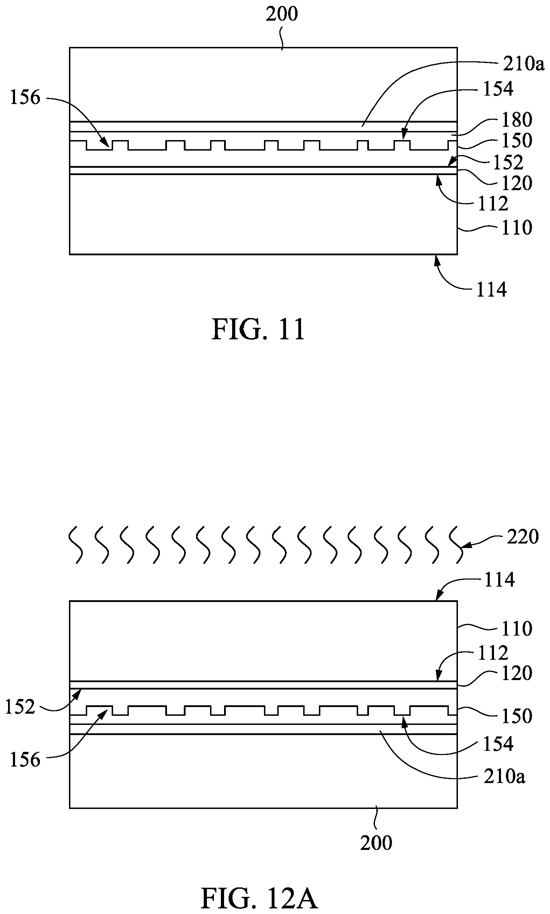

Next, as shown in FIG. 11, a light penetrating substrate 200 is adhered to the optical layer 180 by using an adhesive layer 210a, such that the optical layer 180 and the light penetrating substrate 200 are respectively located on two opposite sides of the adhesive layer 210a. The light penetrating substrate 200 is a substrate with a high refractive index. In some exemplary examples, the light penetrating substrate 200 may be a glass substrate or a fused silica substrate.

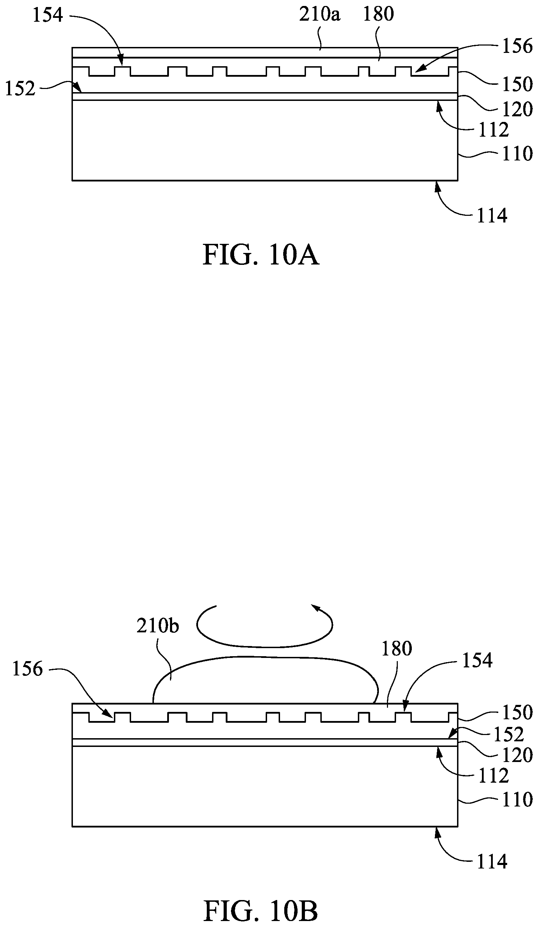

In some examples, as shown in FIG. 10A, in the operation of adhering the light penetrating substrate 200 to the optical layer 180, the adhesive layer 210a is adhered to the optical layer 180, and then the light penetrating substrate 200 is placed on and is adhered to the adhesive layer 210a. In such examples, the adhesive layer 210a is a double-sided tape. The adhesive layer 210a may include a pressure sensitive adhesive. The adhesive layer 210a is transparent. A haze of the adhesive layer 210a may be, for example, smaller than 0.5%, but the present embodiment is not limited thereto. In some exemplary examples, a material of the adhesive layer 210a is a high refractive index material. For example, a refractive index of the adhesive layer 210a may be ranging from 1 to 4.

In some examples, as shown in FIG. 10B, in the operation of adhering the light penetrating substrate 200 to the optical layer 180, an optically clear adhesive 210b is coated on the optical layer 180 to form the adhesive layer. The optically clear adhesive 210b may be formed on the optical layer 180 by a spin coating method. Next, the light penetrating substrate 200 is placed on and is adhered to the adhesive layer composed of the optically clear adhesive 210b. A haze of the optically clear adhesive 210b may be, for example, smaller than 0.5%, but the present embodiment is not limited thereto. In some exemplary examples, a material of the optically clear adhesive 210b is a high refractive index material. For example, a refractive index of the optically clear adhesive 210b may be ranging from 1 to 4.

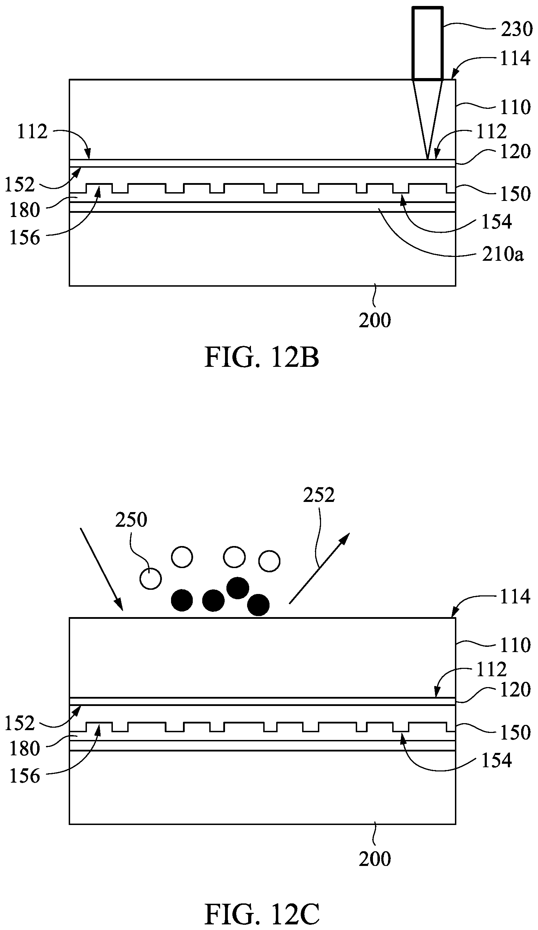

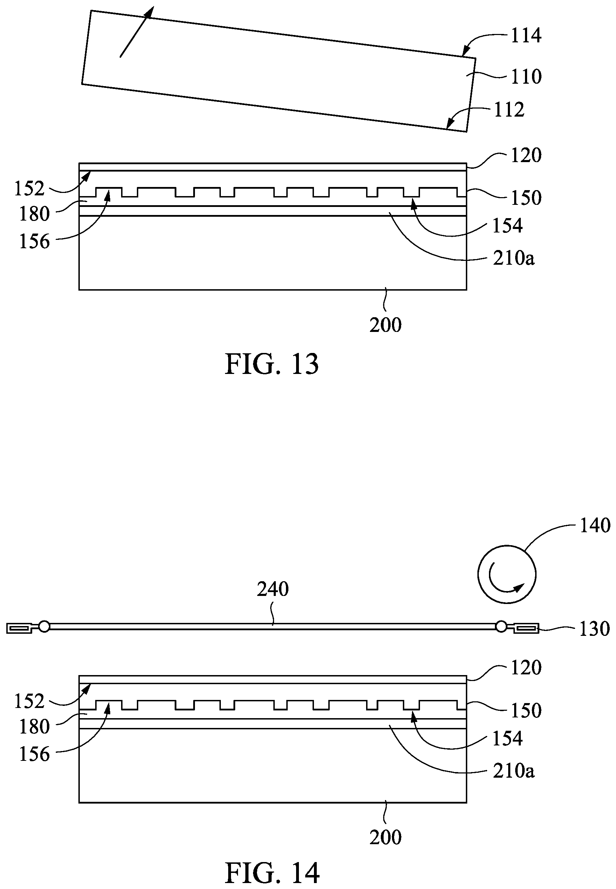

Then, as shown in FIG. 13, the carrier 110 is removed from the bonding layer 120. In some examples, as shown in FIG. 12A, in the operation of removing the carrier 110, a heat treatment 220 is performed to reduce a bonding force between the carrier 110 and the bonding layer 120. Thus, after the heat treatment 220, the carrier 110 and the bonding layer 120 can be separated from each other easier. In another example, as shown in FIG. 12B, in the operation of removing the carrier 110, a laser ablation step is firstly performed on the bonding layer 120 by using a laser device 230, such that the carrier 110 and the bonding layer 120 can be separated from each other successfully. In still another example, as shown in FIG. 12C, in the operation of removing the carrier 110, an etching step is performed on the carrier 110 by using an etchant 250 to reduce the carrier 110 until the carrier 110 is removed. In the examples that the carrier 110 is formed from silicon dioxide (SiO₂), the etchant 250 may be hydrogen fluoride (HF), and products 252 generated during the etching step are silicon fluoride (SiF₄) and water (H₂O). In the examples that the carrier 110 is formed from calcium metasilicate (CaSiO₃), the etchant 250 may be hydrogen fluoride, and the products 252 may be silicon fluoride, water, and calcium fluoride (CaF₂).

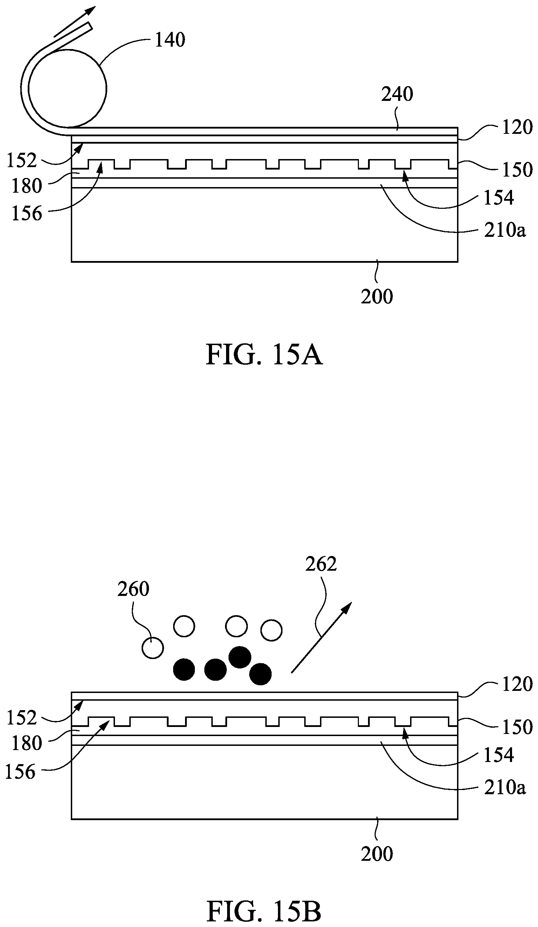

After the carrier 110 is removed, the bonding layer 120 and the mold layer 150 are removed from the optical layer 180. The bonding layer 120 and the mold layer 150 may be removed simultaneously. In the operation of removing the bonding layer 120 and the mold layer 150, as shown in FIG. 14, an adhesive tape 240 is adhered to the bonding layer 120. In some examples, the adhesive tape 240 may be held by the clamping apparatus 130. Then, the adhesive tape 240 may be pressed onto the bonding layer 120 by using the roller 140. Sequentially, as shown in FIG. 15A and FIG. 16, the bonding layer 120 and the mold layer 150 are pulled by using the adhesive tape 240, so as to complete the formation of the optical element 100.

The anti-sticking treatment has been performed on the second surface 154 of the mold layer 150, such that a bonding force between the second surface 154 of the mold layer 150 and the optical layer 180 is smaller than a bonding surface between the first surface 152 of the mold layer 150 and the bonding layer 120. Therefore, the mold layer 150 can be separated from the optical layer 180 successfully, and the bonding layer 120 and the mold layer 150 can be easily pulled away.

In another examples, as shown in FIG. 15B, in the operation of removing the bonding layer 120 and the mold layer 150, an etching step is performed on the bonding layer 120 and the mold layer 150 by using an etchant 260 to etch away the bonding layer 120 and the mold layer 150. For example, the etchant 260 may include argon (Ar₂) and chlorine (Cl₂). During the etching step, some products 262 are generated and are pumped out.

In still another examples, as shown in FIG. 15C, in the operation of removing the bonding layer 120 and the mold layer 150, a chemical soaking step is performed on the bonding layer 120 and the mold layer 150 by soaking the bonding layer 120 and the mold layer 150 with a chemical 270. For example, in the chemical soaking step, the stacked structure including light penetrating substrate 200, the adhesive layer 210a, the optical layer 180, the mold layer 150, and the bonding layer 120 is immersed in the chemical 270 in a container 272. After soaking with the chemical 270, the bonding layer 120 and the mold layer 150 can be removed from the optical layer 180. In some exemplary examples, the chemical 270 is a residue remover of the EKC series that is researched and developed by the DuPont EKC Technology company.

Referring to FIG. 16 continuously, the optical element 100 includes the light penetrating substrate 200, the adhesive layer 210a, and the optical layer 180. The optical layer 180 has a first surface 183 and a second surface 184 on two opposite sides of the optical layer 180. The optical layer 180 is located on a surface 202 of the light penetrating substrate 200. The adhesive layer 210a is sandwiched between the surface 202 of the light penetrating substrate 200 and the second surface 184 of the optical layer 180. After the mold layer 150 is removed from the first surface 183 of the optical layer 180, the first surface 183 is formed with diffracting optical structures 186. For example, each of the diffracting optical structures 186 may be a slanting structure, a binary structure, a stepped structure, a triangle structure, or a trapezoid structure.

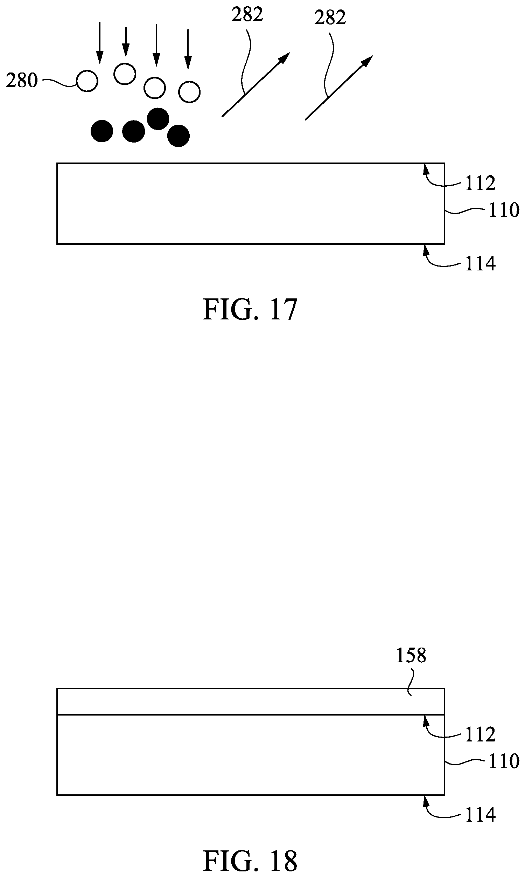

Referring to FIG. 17 through FIG. 24, FIG. 25A, FIG. 26, FIG. 27A, and FIG. 28A are schematic diagrams of intermediate stages in a method for manufacturing of an optical element in accordance with one embodiment of the present disclosure. In the present embodiment, in the manufacturing of the optical element 100 shown in FIG. 16, the carrier 110 is firstly provided. Optionally, before any material layer is formed on the carrier 110, a plasma cleaning step may be performed on the carrier 110 to use a plasma 280 to clean the carrier 110. For example, the plasma 280 may be an oxygen plasma. During the plasma cleaning step, products 282 are generated and are pumped out. The products 282 may be H₂O and/or CO₂. In the example that the carrier 110 is clean, the plasma cleaning step can be omitted.

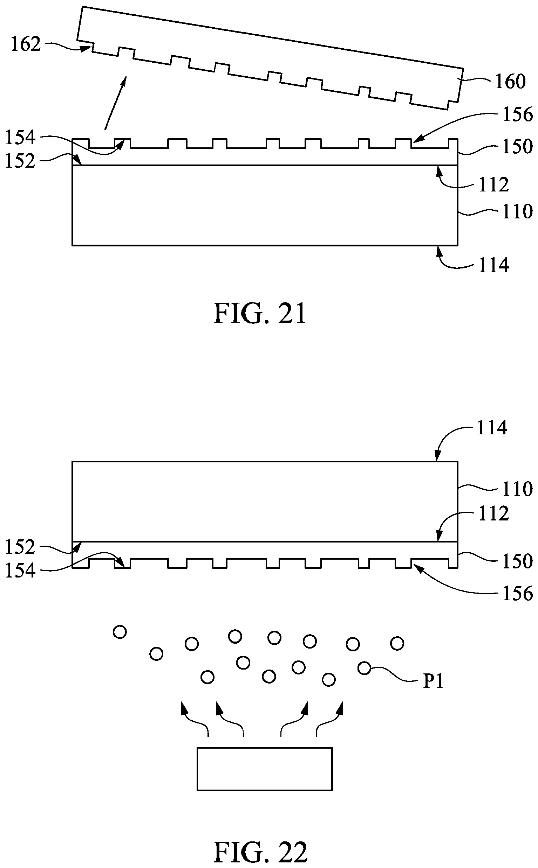

Next, the mold layer 150 shown in FIG. 21 may be directly formed on the surface 112 of the carrier 110. The first surface 152 and the second surface 154 of the mold layer 150 are opposite to each other, and the first surface 152 is adjacent to the carrier 110. For example, the first surface 152 may directly contact with the surface 112 of the carrier 110. The second surface 154 is set with the microstructures 156.

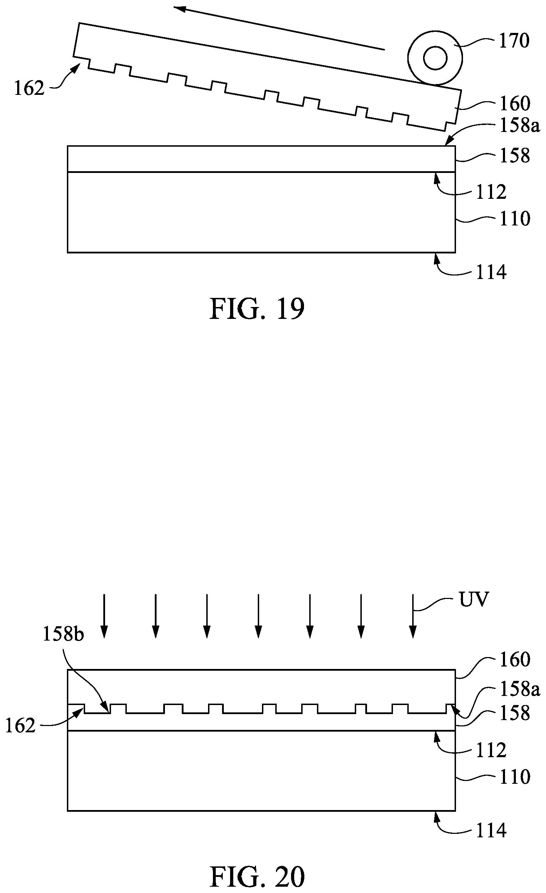

In some examples, as shown in FIG. 18, in the formation of the mold layer 150, the glue layer 158 may be firstly coated on the surface 112 of the carrier 110 by using, for example, a spin coating method. Then, the microstructures 156 are formed on the surface 158a of the glue layer 158, such that the mold layer 150 with the microstructures 156 is formed. In the forming of the microstructures 156, an imprinting step may be performed on the surface 158a of the glue layer 158 by using the imprinting mold 160. In the imprinting step, as shown in FIG. 19 and FIG. 20, the imprinting mold 160 is pressed on the surface 158a of the glue layer 158 while the glue layer 158 has not been hardened, such that a portion of the glue layer 158 is embedded in the pattern structure 162 of the imprinting mold 160. The imprinting step may be performed by using the roller 170 to press the imprinting mold 160 onto the surface 158a of the glue layer 158.

In some examples, as shown in FIG. 20, when the imprinting mold 160 is pressed on the surface 158a of the glue layer 158, the glue layer 158 is cured to maintain a shape of the surface 158a of the glue layer 158. After curing, the pattern structure 158b, which is opposite to the pattern structure 162 of the imprinting mold 160, is formed on the surface 158a of the glue layer 158. For ultraviolet light UV example, the glue layer 158 may be cured to perform an ultraviolet light exposure treatment on the glue layer 158. The glue layer 158 is cured by using an ultraviolet light UV to perform with a thermal curing treatment on the glue layer 158. Alternatively, the glue layer 158 may be cured by performing a thermal curing treatment on the glue layer 158. After curing, the imprinting mold 160 is removed to complete the formation the microstructures 156 of the mold layer 150, as shown in FIG. 21.

Then, an anti-sticking treatment may be performed on the second surface 154 of the mold layer 150. For example, as shown in FIG. 22, in the anti-sticking treatment, the stacked structure including the carrier 110 and the mold layer 150 may be flipped, and an anti-sticking material P1 may be then deposited on the second surface 154 of the mold layer 150 by using an evaporation method. In another example, in the anti-sticking treatment, a surface modification treatment is performed on the second surface 154 of the mold layer 150 by using, for example, plasma to make the second surface 154 have an anti-sticking property.

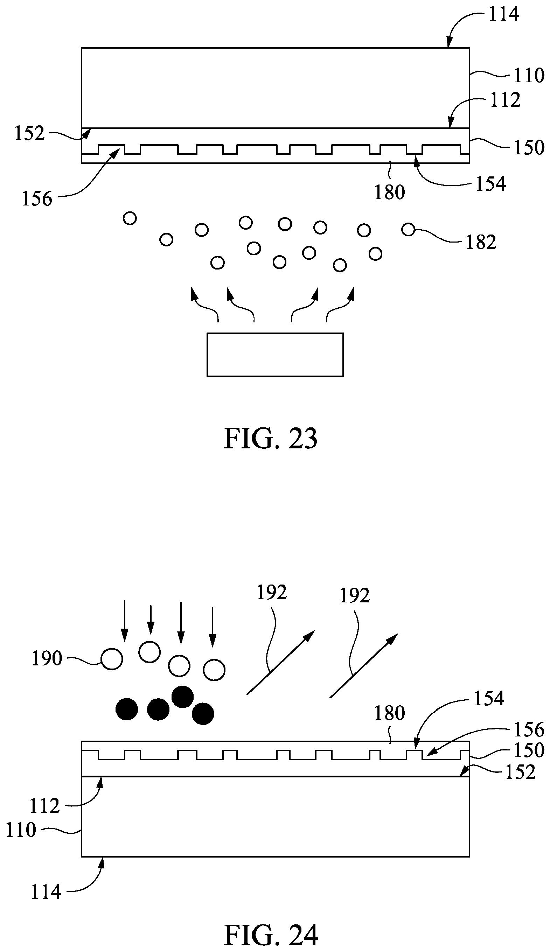

After the anti-sticking treatment, the optical layer 180 may be formed on the second surface 154 of the mold layer 150 by using, for example, an atomic layer deposition method, an etching method, a sputtering method, an evaporation method, an imprinting method, or a spin coating method. As shown in FIG. 23, the optical layer 180 covers the microstructures 156 of the mold layer 150 and fills concaves of the microstructures 156, such that a surface structure, which is opposite to a topographical structure of the second surface 154 of the mold layer 150, is formed on the optical layer 180. In the forming of the optical layer 180, the optical material 182 is deposited on the second surface 154 of the mold layer 150. The optical layer 180 is formed from a high refractive index material. For example, a refractive index of the optical layer 180 may be ranging from 1 to 4.

In some examples, after the optical layer 180 is formed, the stacked structure including the carrier 110, the mold layer 150, and the optical layer 180 is flipped. Then, as shown in FIG. 24, a plasma cleaning step may be optionally performed on the optical layer 180 to clean the optical layer 180. The plasma cleaning step is performed by using the plasma 190, such as an oxygen plasma. During the plasma cleaning step, the products 192 are pumped out. The products 192 may be H₂O and/or CO₂.

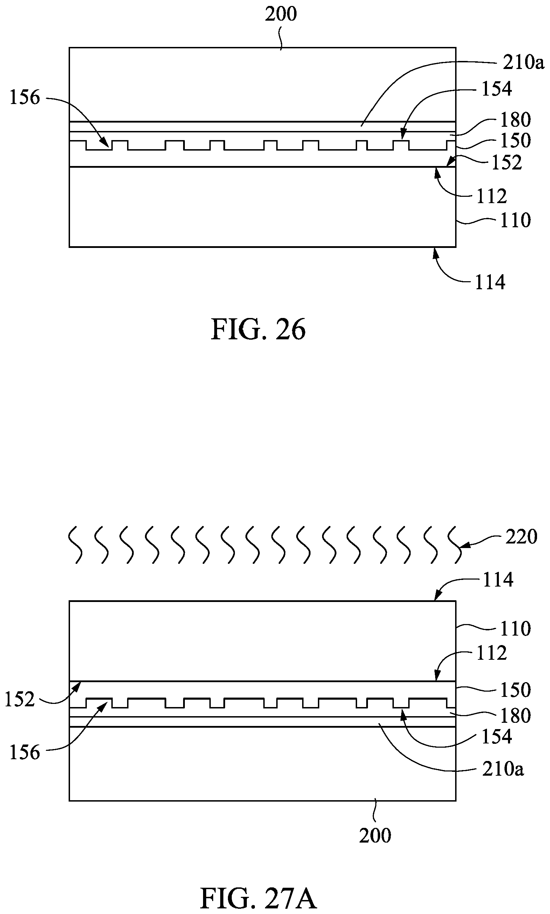

Subsequently, as shown in FIG. 26, the light penetrating substrate 200 may be adhered to the optical layer 180 by using the adhesive layer 210a. Thus, the optical layer 180 and the light penetrating substrate 200 are respectively located on two opposite sides of the adhesive layer 210a.

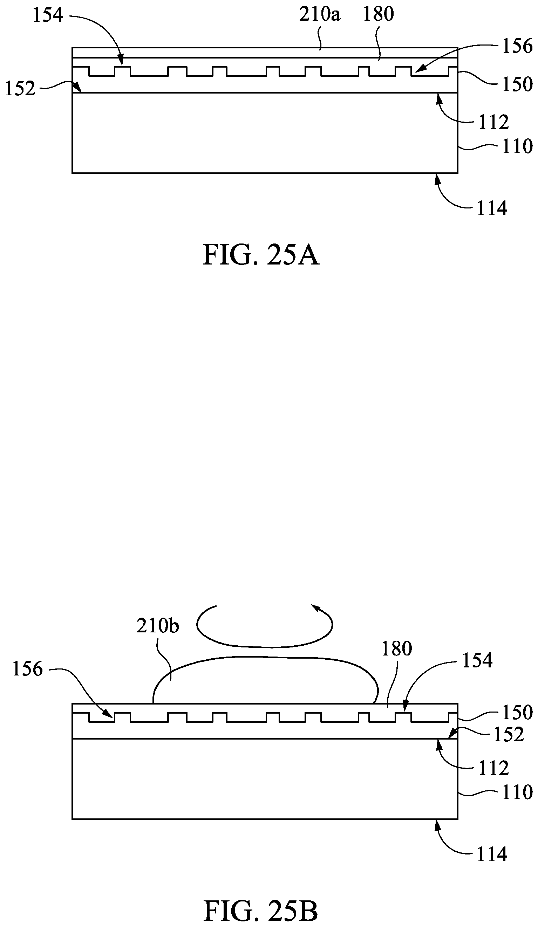

In some examples, as shown in FIG. 25A, in the operation of adhering the light penetrating substrate 200 to the optical layer 180, the adhesive layer 210a is firstly adhered to the optical layer 180, and the light penetrating substrate 200 is placed on and is adhered to the adhesive layer 210a. In the examples, the adhesive layer 210a is a double-sided tape. The adhesive layer 210a may include a pressure sensitive adhesive. A refractive index of the adhesive layer 210a may be ranging from 1 to 4.

In some examples, as shown in FIG. 25B, in the operation of adhering the light penetrating substrate 200 to the optical layer 180, the optically clear adhesive 210b is coated on the optical layer 180 to form the adhesive layer by using, for example, a spin coating method. Then, the light penetrating substrate 200 is placed on and is adhered to the adhesive layer composed of the optically clear adhesive 210b. A refractive index of the optically clear adhesive 210b may be ranging from 1 to 4.

After the light penetrating substrate 200 is adhered to the optical layer 180, the carrier 110 is removed from the mold layer 150. In some examples, as shown in FIG. 27A, in the operation of removing the carrier 110, a heat treatment 220 is performed to reduce a bonding force between the carrier 110 and the mold layer 150. After the heat treatment 220, the carrier 110 and the mold layer 150 can be separated from each other easier.

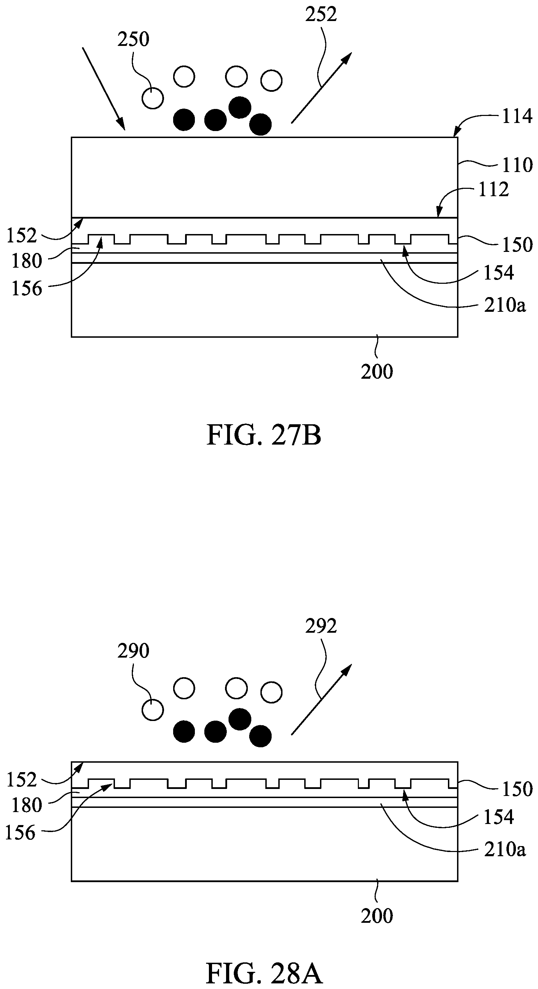

**In** another example, as shown in FIG. 27B, in the operation of removing the carrier 110, an etching step is performed on the carrier 110 by using the etchant 250 to reduce the carrier 110 until the carrier 110 is removed. **In** the examples that the carrier 110 is formed from silicon dioxide, the etchant 250 may be hydrogen fluoride, and the products 252 generated during the etching step may be silicon fluoride and water. **In** the examples that the carrier 110 is formed from calcium metasilicate, the etchant 250 may be hydrogen fluoride, and the products 252 may be silicon fluoride, water, and calcium fluoride.

After the carrier 110 is removed, the mold layer 150 may be removed from the optical layer 180. **In** some examples, as shown in FIG. 28A, in the operation of removing the mold layer 150, an etching step is performed on the mold layer 150 by using an etchant 290 to etch away the mold layer 150. For example, the etchant 290 may include argon and chlorine. During the etching step, some products 292 are generated and are pumped out.

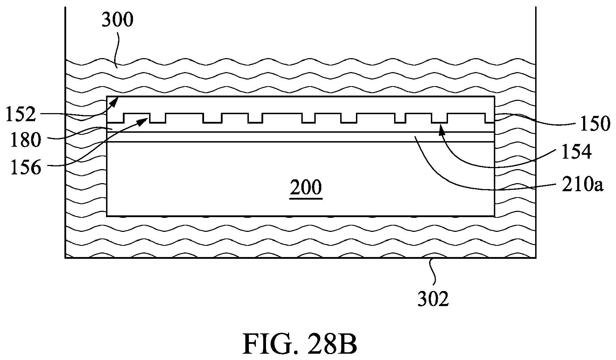

**In** another examples, as shown in FIG. 28B, in the operation of removing the mold layer 150, a chemical soaking step is performed on the mold layer 150 by soaking the mold layer 150 with a chemical 300. For example, in the chemical soaking step, the stacked structure including light penetrating substrate 200, the adhesive layer 210a, the optical layer 180, and the mold layer 150 is immersed in the chemical 300 in a container 302. After soaking with the chemical 300, the mold layer 150 can be removed from the optical layer 180, so as to complete the formation of the optical element 100. **In** some exemplary examples, the chemical 300 is a residue remover of the EKC series that is researched and developed by the DuPont EKC Technology company.

One advantage of the present invention is that various diffracting optical structures are formed on an optical layer, which is made from a high refractive index material, such that the optical element with a higher diffraction angle is obtained.

## Claims

1. A method for manufacturing an optical element (100), and the method comprising:
providing a carrier (110);
attaching a bonding layer (120) to a surface (112) of the carrier (110);
forming a mold layer (150) on the bonding layer (120), wherein the mold layer (150) has a first surface (152) and a second surface (154), which are opposite to each other, the first surface (152) is adjacent to the carrier (110), and the second surface (154) is set with a plurality of microstructures (156);
performing an anti-sticking treatment on the second surface (154) of the mold layer (150);
forming an optical layer (180) on the second surface (154) of the mold layer (150) after performing the anti-sticking treatment, wherein the optical layer (180) covers and fills the microstructures (156);
adhering a light penetrating substrate (200) to the optical layer (180) using an adhesive layer (210a), wherein the optical layer (180) and the light penetrating substrate (200) are respectively located on two opposite sides of the adhesive layer (210a);
removing the carrier (110) from the bonding layer (120); and
removing the bonding layer (120) and the mold layer (150) from the optical layer (180);
**characterized in that** removing the bonding layer (120) and the mold layer (150) from the optical layer (180) comprises:
adhering an adhesive tape (240) to the bonding layer (120); and
using the adhesive tape (240) to pull the bonding layer (120) and the mold layer (150) away from the optical layer (180).

2. The method of claim 1, **characterized in that** forming the mold layer (150) on the carrier (110) comprises:
coating a glue layer (158) on the carrier (110); and
forming the microstructures (156) on a surface (158a) of the glue layer (158) to form the mold layer (150).

3. The method of claim 2, **characterized in that** forming the microstructures (156) on the surface (158a) of the glue layer (158) comprises:
performing an imprinting step on the surface (158a) of the glue layer (158) to press an imprinting mold (160) on the surface (158a) of the glue layer (158);
curing the glue layer (158) when the imprinting mold (160) is pressed on the surface (158a) of the glue layer (158); and
removing the imprinting mold (160).

4. The method of claim 3, **characterized in that** curing the glue layer (158) comprises performing an ultraviolet light exposure treatment, an ultraviolet light exposure with thermal curing treatment, or a thermal curing treatment.

5. The method of any of claims 1-4, **characterized in that** performing the anti-sticking treatment comprises depositing an anti-sticking material (P1) on the second surface (154) of the mold layer (150), or performing a surface modification treatment on the second surface (154) of the mold layer (150).

6. The method of any of claims 1-5, **characterized in that** a refractive index of the optical layer (180) is ranging from 1 to 4.

7. The method of any of claims 1-5, **characterized in that** between forming the optical layer (180) and adhering the light penetrating substrate (200) to the optical layer (180), the method further comprises performing a plasma cleaning step on the optical layer (180).

8. The method of any of claims 1-7, **characterized in that** removing the carrier (110) from the bonding layer (120) comprises:
performing a heat treatment (220) to reduce a bonding force between the carrier (110) and the bonding layer (120), and separating the carrier (110) and the bonding layer (120); or
performing an etching step on the carrier (110) to reduce the carrier (110).

9. The method of any of claims 1-7, **characterized in that** removing the carrier (110) from the bonding layer (120) comprises:
performing a laser ablation step on the bonding layer (120).

## Patentansprüche

1. Ein Verfahren zur Herstellung eines optischen Elements (100), wobei das Verfahren Folgendes aufweist:
Bereitstellen eines Trägers (110);
Anbringen einer Verbindungsschicht (120) an einer Oberfläche (112) des Trägers (110);
Ausbilden einer Formschicht (150) auf der Verbindungsschicht (120), wobei die Formschicht (150) eine erste Oberfläche (152) und eine zweite Oberfläche (154) aufweist, die einander gegenüberliegen, wobei die erste Oberfläche (152) an den Träger (110) angrenzt und die zweite Oberfläche (154) mit einer Vielzahl von Mikrostrukturen (156) versehen ist;
Durchführen einer Antihaftbehandlung auf der zweiten Oberfläche (154) der Formschicht (150);
Ausbilden einer optischen Schicht (180) auf der zweiten Oberfläche (154) der Formschicht (150) nach dem Durchführen der Antihaftbehandlung, wobei die optische Schicht (180) die Mikrostrukturen (156) bedeckt und ausfüllt;
Aufkleben eines lichtdurchlässigen Substrats (200) auf die optische Schicht (180) unter Verwendung einer Klebeschicht (210a), wobei sich die optische Schicht (180) und das lichtdurchlässige Substrat (200) jeweils auf zwei gegenüberliegenden Seiten der Klebeschicht (210a) befinden;
Entfernen des Trägers (110) von der Verbindungsschicht (120); und
Entfernen der Verbindungsschicht (120) und der Formschicht (150) von der optischen Schicht (180);
**dadurch gekennzeichnet, dass** das Entfernen der Verbindungsschicht (120) und der Formschicht (150) von der optischen Schicht (180) Folgendes aufweist:
Aufkleben eines Klebebands (240) auf die Verbindungsschicht (120); und
Verwenden des Klebebands (240), um die Verbindungsschicht (120) und die Formschicht (150) von der optischen Schicht (180) abzuziehen.

2. Verfahren nach Anspruch 1, **dadurch gekennzeichnet, dass** das Ausbilden der Formschicht (150) auf dem Träger (110) Folgendes aufweist:
Aufbringen einer Klebeschicht (158) auf den Träger (110); und
Ausbilden der Mikrostrukturen (156) auf einer Oberfläche (158a) der Klebeschicht (158), um die Formschicht (150) auszubilden.

3. Verfahren nach Anspruch 2, **dadurch gekennzeichnet, dass** das Ausbilden der Mikrostrukturen (156) auf der Oberfläche (158a) der Klebeschicht (158) Folgendes aufweist:
Durchführen eines Prägeschritts auf der Oberfläche (158a) der Klebeschicht (158), um eine Prägeform (160) auf die Oberfläche (158a) der Klebeschicht (158) zu pressen;
Aushärten der Klebeschicht (158), wenn die Prägeform (160) auf die Oberfläche (158a) der Klebeschicht (158) gedrückt wird; und
Entfernen der Prägeform (160).

4. Verfahren nach Anspruch 3, **dadurch gekennzeichnet, dass** das Aushärten der Klebeschicht (158) eine Bestrahlung mit ultraviolettem Licht, eine Bestrahlung mit ultraviolettem Licht mit thermischer Aushärtung oder eine thermische Aushärtung aufweist.

5. Verfahren nach einem der Ansprüche 1 bis 4, **dadurch gekennzeichnet, dass** das Durchführen der Antihaftbehandlung Aufbringen eines Antihaftmaterials (P1) auf die zweite Oberfläche (154) der Formschicht (150) oder Durchführen einer Oberflächenmodifizierungsbehandlung an der zweiten Oberfläche (154) der Formschicht (150) aufweist.

6. Verfahren nach einem der Ansprüche 1 bis 5, **dadurch gekennzeichnet, dass** ein Brechungsindex der optischen Schicht (180) im Bereich von 1 bis 4 liegt.

7. Verfahren nach einem der Ansprüche 1 bis 5, **dadurch gekennzeichnet, dass** zwischen dem Ausbilden der optischen Schicht (180) und dem Aufkleben des lichtdurchlässigen Substrats (200) auf die optische Schicht (180) das Verfahren ferner Durchführen eines Plasmareinigungsschritts an der optischen Schicht (180) aufweist.

8. Verfahren nach einem der Ansprüche 1 bis 7, **dadurch gekennzeichnet, dass** das Entfernen des Trägers (110) von der Verbindungsschicht (120) aufweist:
Durchführen einer Wärmebehandlung (220), um eine Verbindungskraft zwischen dem Träger (110) und der Verbindungsschicht (120) zu verringern, und Trennen des Trägers (110) und der Verbindungsschicht (120); oder
Durchführen eines Ätzschritts an dem Träger (110), um den Träger (110) zu reduzieren.

9. Verfahren nach einem der Ansprüche 1 bis 7, **dadurch gekennzeichnet, dass** das Entfernen des Trägers (110) von der Verbindungsschicht (120) aufweist:
Durchführen eines Laserablationsschritts an der Verbindungsschicht (120).

## Revendications

1. Procédé de fabrication d'un élément optique (100), et le procédé comprenant :
la fourniture d'un support (110) ;
la fixation d'une couche d'adhérence (120) sur une surface (112) du support (110) ;
la formation d'une couche de moulage (150) sur la couche d'adhérence (120), dans lequel la couche de moulage (150) a une première surface (152) et une deuxième surface (154), qui sont opposées l'une à l'autre, la première surface (152) est adjacente au support (110), et la deuxième surface (154) est munie d'une pluralité de microstructures (156) ;
la mise en œuvre d'un traitement antiadhésif sur la deuxième surface (154) de la couche de moulage (150) ;
la formation d'une couche optique (180) sur la deuxième surface (154) de la couche de moulage (150) après la mise en œuvre du traitement antiadhésif, dans lequel la couche optique (180) recouvre et remplit les microstructures (156) ;
le collage d'un substrat de pénétration de la lumière (200) à la couche optique (180) en utilisant une couche adhésive (210a), dans lequel la couche optique (180) et le substrat de pénétration de la lumière (200) sont respectivement situés sur deux côtés opposés de la couche adhésive (210a) ;
le retrait du support (110) de la couche d'adhérence (120) ; et
le retrait de la couche d'adhérence (120) et de la couche de moulage (150) de la couche optique (180) ;
**caractérisé en ce que** le retrait de la couche d'adhérence (120) et de la couche de moulage (150) de la couche optique (180) comprend :
le collage d'un ruban adhésif (240) à la couche d'adhérence (120) ; et
l'utilisation du ruban adhésif (240) pour éloigner la couche d'adhérence (120) et la couche de moulage (150) de la couche optique (180).

2. Procédé selon la revendication 1, **caractérisé en ce que** la formation de la couche de moulage (150) sur le support (110) comprend :
le revêtement du support (110) par une couche de colle (158) ; et
la formation des microstructures (156) sur une surface (158a) de la couche de colle (158) pour former la couche de moulage (150).

3. Procédé selon la revendication 2, **caractérisé en ce que** la formation des microstructures (156) sur la surface (158a) de la couche de colle (158) comprend :
la mise en œuvre d'une étape d'impression sur la surface (158a) de la couche de colle (158) pour presser un moule d'impression (160) sur la surface (158a) de la couche de colle (158) ;
le durcissement de la couche de colle (158) lorsque le moule d'impression (160) est pressé sur la surface (158a) de la couche de colle (158) ; et
le retrait du moule d'impression (160).

4. Procédé selon la revendication 3, **caractérisé en ce que** le durcissement de la couche de colle (158) comprend la mise en œuvre d'un traitement d'exposition à la lumière ultraviolette, d'une exposition à la lumière ultraviolette avec traitement de durcissement thermique ou d'un traitement de durcissement thermique.

5. Procédé selon l'une quelconque des revendications 1 à 4, **caractérisé en ce que** la mise en œuvre du traitement antiadhésif comprend le dépôt d'un matériau antiadhésif (P1) sur la deuxième surface (154) de la couche de moulage (150), ou la mise en œuvre d'un traitement de modification de surface sur la deuxième surface (154) de la couche de moulage (150).

6. Procédé selon l'une quelconque des revendications 1 à 5, **caractérisé en ce qu'**un indice de réfraction de la couche optique (180) est dans la plage allant de 1 à 4.

7. Procédé selon l'une quelconque des revendications 1 à 5, **caractérisé en ce que**, entre la formation de la couche optique (180) et le collage du substrat de pénétration de la lumière (200) à la couche optique (180), le procédé comprend en outre la mise en œuvre d'une étape de nettoyage au plasma sur la couche optique (180).

8. Procédé selon l'une quelconque des revendications 1 à 7, **caractérisé en ce que** le retrait du support (110) de la couche d'adhérence (120) comprend :
la mise en œuvre d'un traitement thermique (220) pour réduire la force de liaison entre le support (110) et la couche d'adhérence (120), et la séparation du support (110) et de la couche d'adhérence (120) ; ou
la mise en œuvre d'une étape de gravure sur le support (110) pour réduire le support (110).

9. Procédé selon l'une quelconque des revendications 1 à 7, **caractérisé en ce que** le retrait du support (110) de la couche d'adhérence (120) comprend :
la mise en œuvre d'une étape d'ablation au laser sur la couche d'adhérence (120).
